# EUROPÄISCHE PATENTSCHRIFT

(11) **EP 3 042 094 B1**
(45) Veröffentlichungstag und Bekanntmachung des Hinweises auf die Patenterteilung: **16.12.2020**
(21) Anmeldenummer: 14758359.5
(22) Anmeldetag: 28.08.2014
(51) Int. Cl.: F16D 23/06

(54) **SYNCHRONISIERUNG SOWIE VERFAHREN ZUM SCHALTEN EINES GANGS**
SYNCHRONIZATION SYSTEM AND METHOD FOR CHANGING A GEAR
DISPOSITIF DE SYNCHRONISATION ET PROCÉDÉ DE COMMUTATION D'UNE VITESSE

(30) Priorität: 02.09.2013 DE 102013109568
(43) Veröffentlichungstag der Anmeldung: 13.07.2016
(73) Patentinhaber: HOERBIGER Antriebstechnik Holding GmbH, 86956 Schongau (DE)
(72) Erfinder: BACK, Ottmar, 82362 Weilheim (DE)
(74) Vertreter: Prinz & Partner mbB
(86) Internationale Anmeldenummer: PCT/EP2014/068294
(87) Internationale Veröffentlichungsnummer: WO 2015/028566

(56) Entgegenhaltungen:
- EP-A1- 2 166 244
- EP-A1- 2 299 139
- EP-A2- 2 163 778
- DE-C1- 4 404 093
- GB-A- 2 184 177
- US-A- 5 085 303

## Beschreibung

Die Erfindung betrifft eine Synchronisierung für ein Schaltgetriebe sowie ein Verfahren zum Schalten eines Gangs in einer Synchronisierung.

Aus dem Stand der Technik sind Synchronisierungen bekannt, die einen Synchronkörper aufweisen, der einer Getriebewelle zugeordnet ist. Am Synchronkörper ist typischerweise ein Druckstück verstellbar angeordnet, das bei einem Schaltvorgang von einer Schiebemuffe derart verstellt wird, dass es einen Synchronring aktiviert. Der Synchronring wirkt wiederum mit einem Gangrad zusammen, wodurch die Drehzahlen des Synchronkörpers und des entsprechenden Gangrads synchronisiert werden können. Nach erfolgter Synchronisierung der Drehzahlen wird die Schiebemuffe weiter verstellt, sodass ein Drehmoment vom auf der Getriebewelle angeordneten Synchronkörper auf das entsprechende Gangrad übertragen werden kann.

Es hat sich herausgestellt, dass beim Einspuren der Schiebemuffe auf das Gangrad der Synchronring weiterhin durch das Druckstück derart axial belastet ist, dass sich ein Reibmoment ergibt, welches beim Einspuren überwunden werden muss. Die Ursache für das weitere axiale Belasten des Synchronrings durch das Druckstück ist dabei hauptsächlich die Reibung zwischen dem Druckstück und dem Synchronkörper, an dem das Druckstück angeordnet ist. Aufgrund der Reibung zwischen dem Druckstück und dem Synchronkörper wird ein axiales Zurückstellen des Druckstücks verhindert. Der Nachteil besteht dabei darin, dass beim Einlegen des Gangs ein erhöhter Kraftaufwand nötig ist, um die über das Druckstück vom Synchronring erzeugte Reibungskraft zu überwinden. Dieses Problem tritt insbesondere bei einem stehenden Fahrzeug auf.

Aus der EP 2 166 244 A1, US 5,085,303 A sowie der GB 2 184 177 A sind Synchronisierungen bekannt, die eine Kontur an der Schaltmuffe aufweisen, die die dazu dient, die Schaltmuffe in ihre geschaltete Position zu beaufschlagen. Die entsprechende Kontur ist demnach dann aktiv, wenn die Schaltmuffe bereits mit dem entsprechenden Gangrad gekoppelt ist.

Auch die EP 2 299 139 A1 und die DE 44 04 093 C1 zeigen Konturen am Innenumfang der Schaltmuffe. Je nach Ausgestaltung dienen diese dazu, dem Verschieben der Schaltmuffe einen zusätzlichen Widerstand entgegenzusetzen oder das Schalten hinsichtlich der notwendigen Kräfte zu erleichtern.

Es ist daher Aufgabe der Erfindung, eine Synchronisierung zu schaffen, die ein leichtgängiges Einlegen des Gangs ermöglicht.

Die Aufgabe wird erfindungsgemäß durch eine Synchronisierung für ein Schaltgetriebe gelöst, mit einem Synchronkörper, der einer Getriebewelle zugeordnet ist, einem ersten und einem zweiten Synchronring, die einem ersten bzw. einem zweiten Gangrad zugeordnet sind und bei einem Schaltvorgang die Drehzahlen des Synchronkörpers und des entsprechenden Gangrads synchronisieren können, einer Schiebemuffe, die drehfest auf dem Synchronkörper angeordnet ist und aus einer Neutralstellung in entgegengesetzten Richtungen in eine erste und eine zweite Schaltstellung verschoben werden kann, um das erste bzw. das zweite Gangrad drehfest mit dem Synchronkörper zu koppeln, und mindestens einem Druckstück, das verstellbar am Synchronkörper angeordnet ist und bei einem Schaltvorgang eine axiale Druckkraft auf den entsprechenden Synchronring ausüben kann, wobei ein elastisches Stellelement vorgesehen ist, das zwischen der Schiebemuffe und dem Druckstück wirksam ist, wobei an der Schiebemuffe eine Rastausnehmung für die Neutralstellung sowie eine Lüftungskontur vorgesehen sind, wobei die Lüftungskontur mit dem Stellelement so zusammenwirken kann, dass das Druckstück, wenn die Schiebemuffe verschoben ist, um mit einem der Gangräder in Eingriff zu gelangen, vom entsprechenden Synchronring weg beaufschlagt wird, und wobei die Lüftungskontur eine axiale Länge aufweist, die nicht mehr als dem Zweifachen des Leerhubs der Schiebemuffe zwischen der Neutralstellung und der Stellung beträgt, in welcher der entsprechende Synchronring gegen eine ihm zugeordnete Reibfläche drückt.

Der Grundgedanke der Erfindung besteht darin, den Andruckvorgang des Druckstücks in zwei Abschnitte zu unterteilen: in einem ersten Abschnitt wird das Druckstück gegen den Synchronring gedrückt, sodass das erforderliche Reibmoment zur Vorsynchronisierung erzeugt wird, und in einem zweiten Abschnitt wird das Druckstück aktiv gelüftet, sodass der Synchronring nicht weiter beaufschlagt wird. Hierdurch tritt keine Reibung bei dem aus dem Synchronring sowie dem entsprechenden Gangrad bestehendem Reibpaket auf. Des Weiteren kann mit der erfindungsgemäßen Synchronisierung eine erhöhte Synchronkapazität erreicht werden, da kleinere Konuswinkel verwendet werden können. Die Länge der Lüftungskontur ist dabei derart auslegt, dass beim Lüften des Reibpakets das gegenüberliegende Reibpaket nicht belastet wird, sodass dort keine ungewollte Reibung auftritt.

Insbesondere weist das Stellelement eine Feder auf, die am Druckstück angeordnet ist. Über die Feder wird die Elastizität des Stellelements derart bereitgestellt, dass das Stellelement entlang der Lüftungskontur sowie der Rastausnehmung der Schiebemuffe gleiten kann.

Ein Aspekt der Erfindung sieht dabei vor, dass das Stellelement eine Kugel umfasst, die in der Neutralstellung von der Feder in die Rastausnehmung der Schiebemuffe gedrückt ist. Durch die Ausbildung des Stellelements als eine von einer Feder beaufschlagten Kugel ist gewährleistet, dass die Schiebemuffe aufgrund ihrer Rastausnehmung in der Neutralstellung gehalten wird. Hierdurch wird eine die Federkraft überwindende Kraft benötigt, um den Schaltvorgang auszulösen.

Ein weiterer Aspekt der Erfindung sieht vor, dass sich an die Lüftungskontur auf der der Rastausnehmung zugeordneten Seite ein Vorsprung und auf der entgegengesetzten Seite ein Halteabschnitt anschließen. Der Vorsprung definiert dabei den Punkt, ab dem das Stellelement beim Schalten von der Rastausnehmung in die Lüftungskontur übergeht, wodurch der Punkt definiert ist, an dem das Druckstück zurückgestellt wird und das Lüften des Reibpakets beginnt. Der Halteabschnitt schließt sich an die Lüftungskontur an, wobei der Halteabschnitt derart ausgelegt ist, dass das Lüften des Reibpakets aufrechterhalten wird und zudem das andere Reibpaket nicht belastet wird.

Insbesondere weist die Mitte des Vorsprungs einen axialen Abstand zur Mitte der Rastausnehmung auf, der kleiner als der axiale Schaltweg der Schiebemuffe ist, der zurückgelegt wird, um ein Drehmoment vom Synchronkörper auf eines der Gangräder zu übertragen. Der Abstand ist insbesondere kleiner als der axiale Schaltweg der Schiebemuffe abzüglich der Wegstrecke, die das Druckstück aus der Neutralstellung bis zur Anlage am entsprechenden Synchronring zurücklegt. Hierdurch wird erreicht, dass das zu lüftende Reibpaket beim Beginn des Einspurens schon gelüftet ist, sodass ein leichtgängiges Einspuren möglich ist.

Ein weiterer Aspekt der Erfindung sieht vor, dass die Lüftungskontur einen Winkel α zur axialen Ausrichtung der Synchronisierung aufweist, der zwischen 10° und 40° liegt, insbesondere 25° beträgt. Über den Winkel α wird die axiale Kraft eingestellt, die von der Lüftungskontur über das Stellelement auf das Druckstück wirkt, wodurch das Druckstück axial verschoben werden kann und das Reibpaket entsprechend gelüftet wird. Würde der Winkel einen zu kleinen Wert annehmen, so würde die axiale Kraft nicht ausreichen, um das Druckstück entsprechend axial zu verstellen.

Gemäß einem Aspekt der Erfindung sind der erste und der zweite Synchronring jeweils konusförmig ausgebildet. Über die konusförmige Ausbildung können erhöhte Reibwerte erreicht werden. Generell ist es mit derartigen Synchronringen möglich, Einkonus- oder Doppelkonus-Synchronisierungen bereitzustellen.

Insbesondere sind je Gangrad ein konusförmiger Zwischenring sowie zwei konusförmige Synchronringe vorgesehen, zwischen denen der Zwischenring angeordnet ist, sodass eine Dreikonus-Synchronisierung ausgebildet ist. Eine Dreikonus-Synchronisierung ist dahingehend vorteilhaft, da besonders hohe Reibwerte erreicht werden können, wodurch eine entsprechend schnelle Synchronisierung der Drehzahlen erreichbar ist. Das Reibpaket wird demnach durch den Zwischenring, die beiden Synchronringe sowie dem zugeordneten Gangrad gebildet.

Ein weiterer Aspekt der Erfindung sieht vor, dass die dem Synchronkörper zugeordnete Seite der Schiebemuffe bezüglich ihrer vertikalen Mittelachse spiegelsymmetrisch ausgebildet ist. Dies bedeutet, dass pro Gangrad jeweils eine Lüftungskontur vorgesehen ist, wodurch das aktive Verschieben des Druckstücks beim Einspuren der Schiebemuffe in beide Gänge bzw. Gangräder möglich ist, um die entsprechenden Reibpakete zu entlasten oder zu lüften.

Ferner betrifft die Erfindung ein Verfahren zum Schalten eines Gangs in einer Synchronisierung mit einem Synchronkörper, der einer Getriebewelle zugeordnet ist, einem ersten und einem zweiten Synchronring, die einem ersten bzw. einem zweiten Gangrad zugeordnet sind und bei einem Schaltvorgang die Drehzahlen des Synchronkörpers und des entsprechenden Gangrads synchronisieren können, einer Schiebemuffe, die drehfest auf dem Synchronkörper angeordnet ist und aus einer Neutralstellung in entgegengesetzten Richtungen in eine erste und eine zweite Schaltstellung verschoben werden kann, um das erste bzw. das zweite Gangrad drehfest mit dem Synchronkörper zu koppeln, und mindestens einem Druckstück, das verstellbar am Synchronkörper angeordnet ist und bei einem Schaltvorgang eine axiale Druckkraft auf den entsprechenden Synchronring ausüben kann, wobei ein elastisches Stellelement vorgesehen ist, das zwischen der Schiebemuffe und dem Druckstück wirksam ist, mit den Schritten:
a) axiales Verstellen der Schiebemuffe aus einer Neutralstellung zu einer Schaltstellung,
b) Andrücken des sich mit dem Synchronkörper drehenden Druckstücks an den dem Gangrad zugeordneten Synchronisationsring zur Vorsynchronisation,
c) Synchronisieren der Drehgeschwindigkeit des Synchronkörpers und des entsprechenden Synchronrings mit der des Gangrads,
d) weiteres axiales Verstellen der Schiebemuffe nach erfolgter Synchronisation zur Schaltstellung,
e) Ausüben einer axialen, vom entsprechenden Gangrad wegweisenden Kraft auf das Druckstück, insbesondere auf das Stellelement, durch die Lüftungskontur der Schiebemuffe während des weiteren axialen Verstellens, sodass das Druckstück nicht mehr am entsprechenden Synchronring anliegt bzw. angedrückt wird, und
f) Erreichen der Schaltstellung, wobei das Stellelement nicht mehr an der Lüftungskontur anliegt.

Über das erfindungsgemäße Verfahren werden die bei der Synchronisierung bereits genannten Vorteile erreicht, wonach das Reibpaket beim Einspuren der Schiebemuffe und nach erfolgter Synchronisation gelüftet wird, sodass das Einspuren entsprechend leichtgängig vonstatten geht.

Insbesondere ist die ausgeübte axiale Kraft größer als die Reibkraft zwischen dem Druckstück und dem Synchronkörper. Aufgrund dieses Kräfteverhältnisses kann die von der Lüftungskontur ausgeübte axiale Druckkraft auf das Stellelement und somit auf das Druckstück die Haftreibung zwischen Druckstück und Synchronkörper überwinden, sodass das Reibpaket aktiv gelüftet wird.

Weitere Vorteile und Eigenschaften der Erfindung ergeben sich aus der nachfolgenden Beschreibung und den nachfolgenden Zeichnungen, auf die Bezug genommen wird. In den Zeichnungen zeigen:
- Figur 1 in einem Teilquerschnitt eine erfindungsgemäße Synchronisierung mit zwei dieser zugeordneten Gangrädern, wobei sich die Synchronisierung in einer Neutralstellung befindet,
- Figur 2 eine Detailansicht der Figur 1,
- Figur 3 die Synchronisierung aus Figur 1 in einer Vorsynchronstellung,
- Figur 4 die Synchronisierung aus den vorherigen Figuren in einer Sperrstellung,
- Figur 5 die Synchronisierung der vorherigen Figuren zu einem Zeitpunkt am Ende der Sperrstellung,
- Figur 6 die Synchronisierung der vorherigen Figuren zu Beginn des Einspurens,
- Figur 7 die Synchronisierung der vorherigen Figuren zu einem späteren Zeitpunkt des Einspurens, und
- Figur 8 die Synchronisierung der vorherigen Figuren nach erfolgter Schaltung.

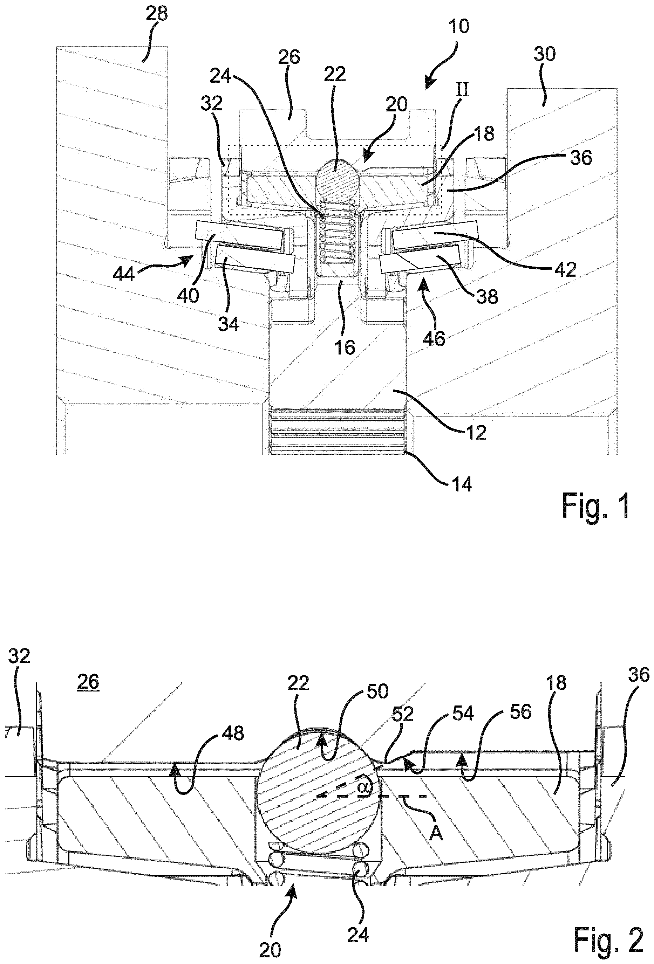

Figur 1 zeigt eine Synchronisierung 10, die einen Synchronkörper 12 aufweist, welcher über eine Verzahnung 14 auf einer hier nicht dargestellten Getriebewelle drehfest angeordnet ist. Die Getriebewelle dreht sich um eine Achse, die in Figur 1 waagrecht unterhalb der Verzahnung 14 liegt.

Der Synchronkörper 12 weist einen Nabenabschnitt 16 auf, in dem ein Druckstück 18 verstellbar angeordnet ist. Dem Druckstück 18 ist ein Stellelement 20 zugeordnet, welches in der gezeigten Ausführungsform durch eine Kugel 22 und eine Feder 24 ausgebildet ist. Die Feder 24 stützt sich dabei am Druckstück 18 ab und beaufschlagt die Kugel 22 in Richtung einer Schiebemuffe 26, also radial nach außen.

Die Schiebemuffe 26 ist drehfest mit dem Synchronkörper 12 verbunden und kann in entgegengesetzte Richtungen axial verschoben werden, um den Synchronkörper 12 mit einem ersten Gangrad 28 oder einem zweiten Gangrad 30 zu koppeln, wodurch ein Drehmoment von der Getriebewelle auf das entsprechende Gangrad 28, 30 übertragen werden kann. Die beiden Gangräder 28, 30 sind auf der Getriebewelle angeordnet, können sich aber frei auf dieser drehen, wenn sie nicht über die Schiebemuffe 26 mit dem Synchronkörper 12 und von diesem über die Verzahnung 14 mit der Getriebewelle drehfest verbunden sind.

Zur Vorsynchronisierung der Drehzahlen des Gangrads 28, 30 und des Synchronkörpers 12 weist die Synchronisierung 10 in der gezeigten Ausführungsform je Gangrad 28 bzw. 30 einen als Sperrring 32 bzw. 36 ausgebildeten Synchronring, einen Synchronring 34 bzw. 38 sowie einen Zwischenring 40, 42 auf. Die Sperrringe 32, 36 sind drehfest mit dem Synchronkörper 12 verbunden. Jeder der Synchronringe 34, 38 ist drehfest mit dem entsprechenden Sperrring 32 bzw. 36 verbunden. Jede der Zwischenringe 40, 42 ist drehfest mit dem ihm zugeordneten Gangrad 28 bzw. 30 verbunden. Somit drehen sich die beiden Zwischenringe 40, 42 mit der Drehgeschwindigkeit des entsprechenden Gangrades 28 bzw. 30, während sich die Sperrringe 32, 36 und die Synchronringe 34, 38 mit der Drehgeschwindigkeit des Synchronkörpers 12 drehen.

Die Sperrringe 32, 36, die Synchronringe 34, 38 sowie die Zwischenringe 40, 42 sind allesamt konusförmig ausgebildet. Die Kontaktflächen zwischen Gangrad und Synchronring, Synchronring und Zwischenring sowie Zwischenring und Sperrring sind jeweils als Reibfläche einer Dreikonus-Synchronisierung mit einem Reibbelag und innerhalb eines Reibpakets 44 bzw. 46 ausgebildet, mit denen das Drehmoment erzeugt werden kann, das zum Synchronisieren von Gangrad 28 bzw. 30 und Synchronkörper 12 nötig ist.

Die Schiebemuffe 26 weist eine dem Druckstück 18 zugeordnete Seite 48 auf, welche mit dem Stellelement 20 zusammenwirkt. Die Schiebemuffe 26 weist dabei an dieser Seite 48 eine Rastausnehmung 50 auf, in der die Kugel 22 des Stellelements 20 in der Neutralstellung der Synchronisierung 10 von der Feder 24 beaufschlagt ist. An die Rastausnehmung 50 angrenzend ist ein Vorsprung 52 ausgebildet, an den sich eine Lüftungskontur 54 sowie ein Halteabschnitt 56 anschließen (siehe Figur 2).

Die Lüftungskontur 54 ist dabei relativ zur axialen Ausrichtung A der Synchronisierung 10 um einen Winkel α schräg ausgebildet, wobei sie insgesamt linear verläuft. Ferner erstreckt sich die Lüftungskontur 54 maximal über eine axiale Länge, die der doppelten Strecke entspricht, die die Schiebemuffe 26 zurücklegt, bis das Druckstück 18 am Sperrring 32 anliegt. Diese Strecke wird auch als Leerhub oder Vorsynchronweg der Schiebemuffe 26 bezeichnet.

Der Halteabschnitt 56 ist in der gezeigten Ausführungsform parallel zur axialen Ausrichtung A der Synchronisierung 10 ausgebildet und erstreckt sich in axialer Richtung bis zu dem Ende der Schiebemuffe 26, welches dem anderen Sperrring 36 zugeordnet ist.

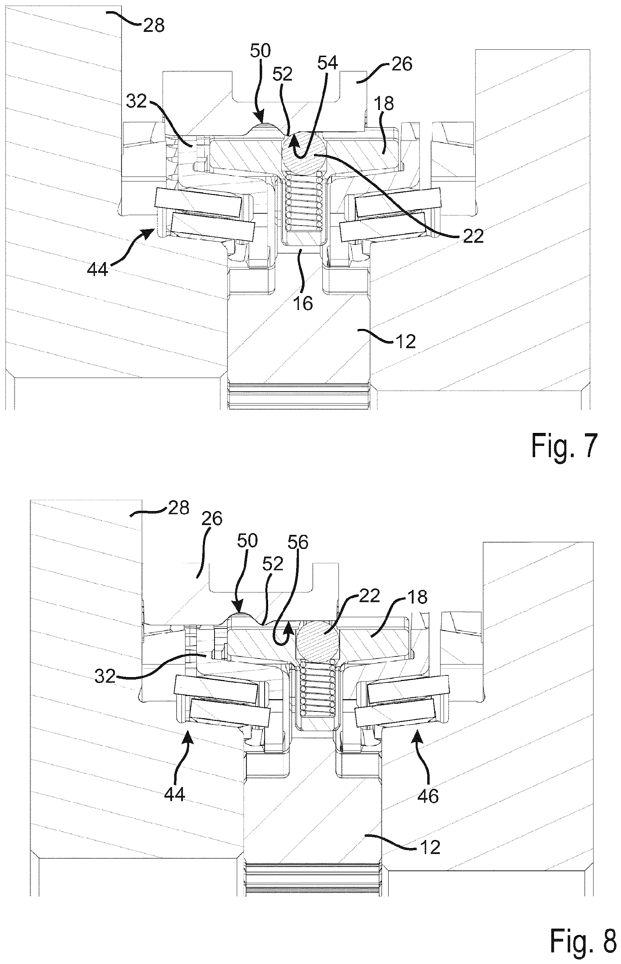

Die Wirkungsweise der Synchronisierung 10 und insbesondere der Lüftungskontur 54 sowie der gesamten dem Druckstück 18 zugeordneten Seite 48 der Schiebemuffe 26 ergibt sich aus der nachfolgenden Beschreibung, in der der Schaltverlauf ausgehend von der in Figur 1 gezeigten Neutralstellung der Synchronisierung 10 zu einer in Figur 8 gezeigten endgültigen Schaltstellung der Synchronisierung 10 beschrieben wird.

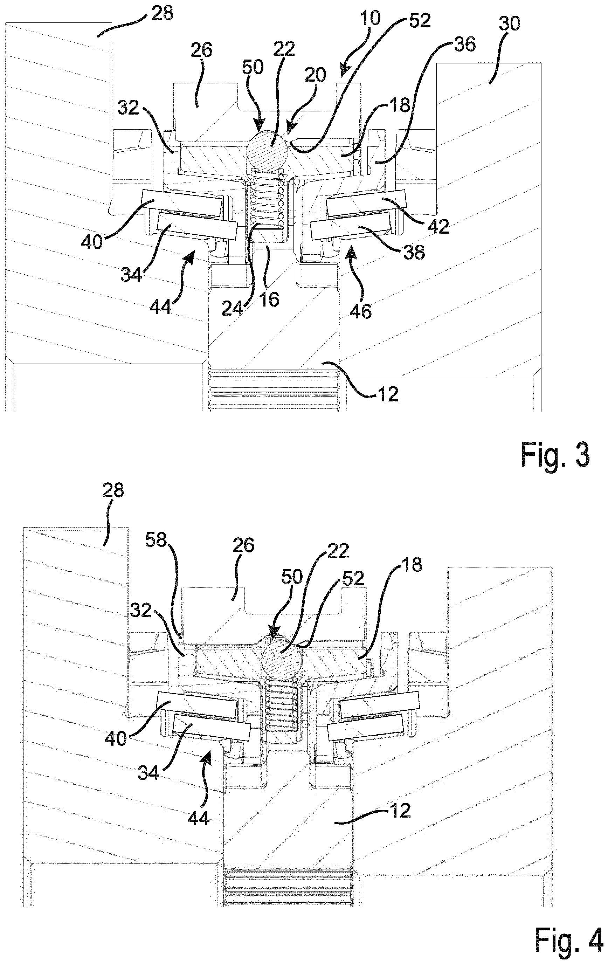

In Figur 3 ist die Synchronisierung 10 aus Figur 1 gezeigt, wobei die Schiebemuffe 26 relativ zum Zustand von Figur 1 axial zum ersten Gangrad 28 verschoben worden ist und über die Rastausnehmung 50 die Kugel 22 des Stellelements 20 mitgenommen hat, sodass auch das Druckstück 18 innerhalb des Synchronkörpers 12 axial zum ersten Gangrad 28 hin verschoben ist.

Durch das axiale Verschieben des Druckstücks 18 liegt das Druckstück 18 am ersten Sperrring 32 derart an, dass das erste Reibpaket 44 belastet wird. Das Druckstück 18 sorgt dabei für die Indexierung des Sperrrings 32 und der Schiebemuffe 26. Ferner beginnt dadurch der Vorgang des Synchronisierens der Drehzahl des Gangrades 28 mit der Drehzahl des Synchronkörpers 12.

In Figur 4 ist die Synchronisierung 10 zu einem späteren Zeitpunkt gezeigt, wobei sich die Synchronisierung 10 in einer Sperrstellung befindet. Aufgrund des wirkenden Drehmoments zwischen dem Synchronkörper 12 und dem Gangrad 28 ist der Sperrring 32 so weit gegenüber dem Synchronkörper 12 verdreht, dass außenliegende Sperrzähne 58 der Innenverzahnung der Schiebemuffe 26 (genauer gesagt den Spitzen 60 der Innenverzahnung) so gegenüberliegen, dass die Schiebemuffe 26 nicht weiter axial verstellt werden kann.

Die Kugel 22 ist, wenn sich die Schiebemuffe 26 in der Sperrstellung befindet, immer noch im Bereich der Rastausnehmung 50 der Schiebemuffe 26 angeordnet, sodass die in der Zeichnung dargestellte Mitte des Stellelements 20 axial näher am ersten Gangrad 28 ist als die Mitte des Vorsprungs 52.

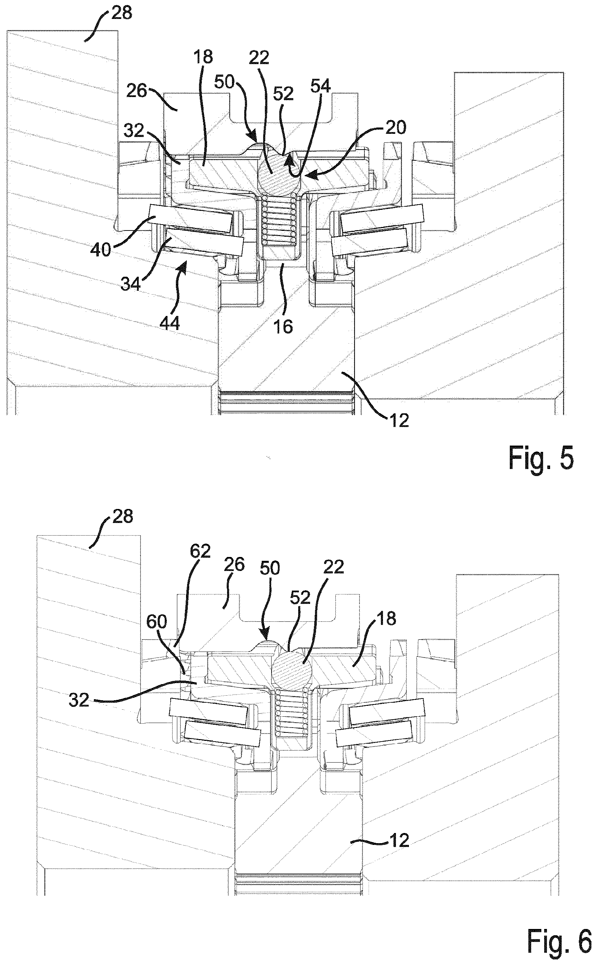

In Figur 5 ist die Synchronisierung 10 in einem Zustand gezeigt, in welchem die Schiebemuffe 26 über die Sperrstellung hinaus in axialer Richtung zum Gangrad 28 hin verstellt worden ist. Hierfür hat die Schiebemuffe 26 durch Zusammenwirken der Sperrzähne 58 und der Spitzen 60 den Sperrring 32 aus seiner Sperrposition so verdreht, dass die Sperrzähne 58 des Sperrrings 32 nicht mehr vor den Spitzen 60 der Schiebemuffe 26 liegen. Dies war möglich, sobald die Drehzahlen von Gangrad 28 und Synchronkörper 12 ausreichend synchronisiert sind, sodass das auf den Sperrring 32 wirkende Synchronisierungsdrehmoment zusammenbricht.

Im Zustand von Figur 5 ist die Schiebemuffe 26 noch nicht mit dem ersten Gangrad 28 gekoppelt, da noch ein Spalt zwischen Schiebemuffe 26 und erstem Gangrad 28 erkennbar ist. Dieser Zustand wird auch als Freiflugphase bezeichnet, da sich die Schiebemuffe 26 zu diesem Zeitpunkt weder mit dem ersten Sperrring 32 noch mit dem ersten Gangrad 28 in Eingriff befindet.

Ferner ist in diesem Zustand der Vorsprung 52 der Schiebemuffe 26 immer noch weiter axial vom ersten Gangrad 28 entfernt als die in der Figur gezeigte Mitte des Stellelements 20.

Das Druckstück 18 liegt auch weiterhin am ersten Sperrring 32 an, wodurch das Druckstück 18 den ersten Sperrring 32 axial beaufschlagt, und das erste Reibpaket 44 belastet ist.

Figur 6 zeigt die Synchronisierung 10 zu Beginn des Einspurens der Schiebemuffe 26 in das erste Gangrad 28. Der Zustand des Einspurens ist dadurch definiert, dass die verzahnungsartigen Spitzen 60 der Schiebemuffe 26 gerade mit verzahnungsartigen Spitzen 62 des ersten Gangrads 28 in Berührung kommen. Die Spitzen 62 des ersten Gangrads 28 sind von der Ausrichtung her analog zu den Sperrzähnen 58 des ersten Sperrrings 32 ausgebildet.

In diesem Zustand, dem Beginn des Einspurens, liegt die Kugel 22 des Stellelements 20 tangential am Vorsprung 52 der Schiebemuffe 26 an, sodass sich die Kugel 22 in einem labilen Gleichgewicht befindet, also am Totpunkt. Dies bedeutet, dass die Kugel 22 beim Einspurpunkt genau zwischen der Rastausnehmung 50 und der Lüftungskontur 54 mittig am Vorsprung 52 anliegt.

Das Druckstück 18 liegt dabei weiterhin axial am ersten Sperrring 32 an und beaufschlagt entsprechend das erste Reibpaket 44.

Figur 7 zeigt die Synchronisierung 10 zu einem späteren Zeitpunkt, wobei die Schiebemuffe 26 gegenüber der Stellung aus Figur 6 minimal bewegt worden ist, sodass die Kugel 22 aus dem labilen Gleichgewicht gebracht worden ist.

Die Kugel 22 ist dabei über den Vorsprung 52 gerutscht und wird von der Feder 24 entlang der Lüftungskontur 54 beaufschlagt. Die Lüftungskontur 54 erzeugt dabei aufgrund der um den Winkel α schrägen Ausrichtung eine axiale Kraft auf die Kugel 22 und das Stellelement 20, das wiederum das Druckstück 18 axial beaufschlagt. Das Druckstück 18 wird letztlich vom ersten Gangrad 28 wegdrückt, wodurch das erste Reibpaket 44 entlastet oder gelüftet wird.

Aufgrund des Entlastens des ersten Reibpakets 44 kann die Schiebemuffe 26 leichtgängiger eingespurt werden, um mit dem ersten Gangrad 28 zu koppeln, da kein Reibmoment zwischen dem Synchronkörper 12 und dem Gangrad 28 überwunden werden muss.

Der Winkel α der Lüftungskontur 54 beträgt dabei typischerweise zwischen 10° und 40°, insbesondere 25°, sodass die von der Lüftungskontur 54 ausgeübte axiale Kraft ausreichend groß ist, um die Reibungskraft zwischen dem Druckstück 18 und dem Nabenabschnitt 16 des Synchronkörpers 12 zu überwinden, sodass das Druckstück 18 überhaupt axial verstellt werden kann.

Das vollständige Schalten des Gangs ist in Figur 8 gezeigt, wobei die Schiebemuffe 26 in das erste Gangrad 28 mit dem Synchronkörper 12 gekoppelt ist, sodass ein Drehmoment von der Getriebewelle über den Synchronkörper 12 auf das erste Gangrad 28 übertragen werden kann.

In diesem Zustand liegt die Kugel 22 an der Schiebemuffe 26 im Bereich eines Halteabschnitts 56 an der dem Druckstück 18 zugeordneten Seite 48 an. Hierdurch wird erreicht, dass die auf das Stellelement 20 ausgeübte axiale Druckkraft nicht so groß ist, dass das Druckstück 18 zu weit vom ersten Gangrad 28 weggedrückt wird. Würde dies der Fall sein, so könnte das Druckstück 18 den dem ersten Sperrring 32 entgegengesetzten Sperrring 36 axial beaufschlagen, wodurch das zweite Reibpaket 46 belastet wäre. Daher ist auch die axiale Länge der Lüftungskontur 54 maximal so lang wie der doppelte Leerhub der Schiebemuffe 26, wie eingangs bereits erwähnt.

Der Verlauf des Halteabschnitts 56 kann parallel zur axialen Ausrichtung A der Synchronisierung 10, wie hier gezeigt, oder mit einem kleinen positiven oder negativen Winkel ausgebildet sein. Der Halteabschnitt 56 sollte jedoch so ausgebildet sein, dass die dabei auf die Kugel 22 wirkende axiale Kraft gering ist. Die Kraft sollte so klein sein, dass das Druckstück 18 nicht mit dem entgegengesetzten Sperrring 36 in Kontakt kommt und das zweite Reibpaket 46 belastet wäre.

Die gezeigte Ausführungsform der Synchronisierung 10 weist lediglich eine Lüftungskontur 54 an der Schiebemuffe 26 auf. Es kann jedoch auch eine Schiebemuffe 26 vorgesehen sein, die auf beiden Seiten der Rastausnehmung 50 jeweils einen Vorsprung und eine Lüftungskontur samt Halteabschnitt aufweist, wodurch ein Lüften beider Reibpakete 44, 46 beim Schalten beider Gänge möglich ist. Eine solche Schiebemuffe 26 zeichnet sich durch ihre Spiegelsymmetrie an der Seite 48 aus.

## Patentansprüche

1. Synchronisierung (10) für ein Schaltgetriebe, mit einem Synchronkörper (12), der einer Getriebewelle zugeordnet ist, einem ersten und einem zweiten Synchronring (32, 34, 36, 38), die einem ersten bzw. einem zweiten Gangrad (28, 30) zugeordnet sind und bei einem Schaltvorgang die Drehzahlen des Synchronkörpers (12) und des entsprechenden Gangrades (28, 30) synchronisieren können, einer Schiebemuffe (26), die drehfest auf dem Synchronkörper (12) angeordnet ist und aus einer Neutralstellung in entgegengesetzten Richtungen in eine erste und eine zweite Schaltstellung verschoben werden kann, um das erste bzw. das zweite Gangrad (28, 30) drehfest mit dem Synchronkörper (12) zu koppeln, und mindestens einem Druckstück (18), das verstellbar am Synchronkörper (12) angeordnet ist und bei einem Schaltvorgang eine axiale Druckkraft auf den entsprechenden Synchronring (32, 34, 36, 38) ausüben kann, wobei ein elastisches Stellelement (20) vorgesehen ist, das zwischen der Schiebemuffe (26) und dem Druckstück (18) wirksam ist, **dadurch gekennzeichnet, dass** an der Schiebemuffe (26) eine Rastausnehmung (50) für die Neutralstellung sowie eine Lüftungskontur (54) vorgesehen sind, wobei die Lüftungskontur (54) mit dem Stellelement (20) so zusammenwirken kann, dass das Druckstück (18), wenn die Schiebemuffe (26) verschoben ist, um mit einem der Gangräder (28, 30) in Eingriff zu gelangen, vom entsprechenden Synchronring (32, 34, 36, 38) weg beaufschlagt wird, und wobei die Lüftungskontur (54) eine axiale Länge aufweist, die nicht mehr als dem zweifachen des Leerhubs der Schiebemuffe (26) zwischen der Neutralstellung und der Stellung beträgt, in welcher der entsprechende Synchronring (32, 34, 36, 38) gegen eine ihm zugeordnete Reibfläche drückt.

2. Synchronisierung (10) nach Anspruch 1, **dadurch gekennzeichnet, dass** das Stellelement (20) über eine Feder (24) am Druckstück (18) angeordnet ist.

3. Synchronisierung (10) nach Anspruch 2, **dadurch gekennzeichnet, dass** das Stellelement (20) eine Kugel (22) umfasst, die in der Neutralstellung von der Feder (24) in die Rastausnehmung (50) der Schiebemuffe (26) gedrückt ist.

4. Synchronisierung (10) nach einem der vorhergehenden Ansprüche, **dadurch gekennzeichnet, dass** sich an die Lüftungskontur (54) auf der der Rastausnehmung (50) zugeordneten Seite ein Vorsprung (52) und auf der entgegengesetzten Seite ein Halteabschnitt (56) anschließen.

5. Synchronisierung (10) nach Anspruch 4, **dadurch gekennzeichnet, dass** die Mitte des Vorsprungs (52) einen axialen Abstand zur Mitte der Rastausnehmung (50) aufweist, der kleiner als der axiale Schaltweg der Schiebemuffe (26) ist, der zurückgelegt wird, um ein Drehmoment vom Synchronkörper (12) auf eines der Gangräder (28, 30) zu übertragen, insbesondere kleiner als der axiale Schaltweg der Schiebemuffe (26) abzüglich der Wegstrecke, die das Druckstück (18) aus der Neutralstellung bis zur Anlage am entsprechenden Synchronring (32, 36) zurücklegt.

6. Synchronisierung (10) nach einem der vorhergehenden Ansprüche, **dadurch gekennzeichnet, dass** die Lüftungskontur (54) einen Winkel α zur axialen Ausrichtung (A) der Synchronisierung (10) aufweist, der zwischen 10° und 40° liegt, insbesondere 25° beträgt.

7. Synchronisierung (10) nach einem der vorhergehenden Ansprüche, **dadurch gekennzeichnet, dass** der erste und der zweite Synchronring (32, 34, 36, 38) jeweils konusförmig ausgebildet ist, insbesondere dass je Gangrad (28, 30) ein konusförmiger Zwischenring (40, 42) sowie zwei konusförmige Synchronringe (32, 34, 36, 38) vorgesehen sind, zwischen denen der Zwischenring (40, 42) angeordnet ist, sodass eine Dreikonus-Synchronisierung ausgebildet ist.

8. Synchronisierung (10) nach einem der vorhergehenden Ansprüche, **dadurch gekennzeichnet, dass** die dem Synchronkörper (12) zugeordnete Seite der Schiebemuffe (26) bezüglich ihrer vertikalen Mittelachse spiegelsymmetrisch ausgebildet ist.

9. Verfahren zum Schalten eines Ganges in einer Synchronisierung (10) mit einem Synchronkörper (12), der einer Getriebewelle zugeordnet ist, einem ersten und einem zweiten Synchronring (32, 34, 36, 38), die einem ersten bzw. einem zweiten Gangrad (28, 30) zugeordnet sind und bei einem Schaltvorgang die Drehzahlen des Synchronkörpers (12) und des entsprechenden Gangrades (28, 30) synchronisieren können, einer Schiebemuffe (26), die drehfest auf dem Synchronkörper (12) angeordnet ist und aus einer Neutralstellung in entgegengesetzten Richtungen in eine erste und eine zweite Schaltstellung verschoben werden kann, um das erste bzw. das zweite Gangrad (28, 30) drehfest mit dem Synchronkörper (12) zu koppeln, und mindestens einem Druckstück (18), das verstellbar am Synchronkörper (12) angeordnet ist und bei einem Schaltvorgang eine axiale Druckkraft auf den entsprechenden Synchronring (32, 34, 36, 38) ausüben kann, wobei ein elastisches Stellelement (20) vorgesehen ist, das zwischen der Schiebemuffe (26) und dem Druckstück (18) wirksam ist, mit den Schritten:
a) Axiales Verstellen der Schiebemuffe (26) aus der Neustralstellung zu einer Schaltstellung,
b) Andrücken des sich mit dem Synchronkörper (12) drehenden Druckstücks (18) an den dem Gangrad (28, 30) zugeordneten Synchronring (32, 34, 36, 38) zur Vorsynchronisation,
c) Synchronisieren der Drehgeschwindigkeiten des Synchronkörpers (12), des entsprechenden Synchronrings (32, 34, 36, 38) und des Gangrads (28, 30),
d) weiteres axiales Verstellen der Schiebemuffe (26) nach erfolgter Synchronisation zur Schaltstellung,
**dadurch gekennzeichnet, dass** das Verfahren zusätzlich folgende Schritte enthält,
e) Ausüben einer axialen, vom entsprechenden Gangrad (28, 30) wegweisenden Kraft auf das Druckstück (18), insbesondere auf das Stellelement (20), durch die Lüftungskontur (54) der Schiebemuffe (26) während des weiteren axialen Verstellens, sodass das Druckstück (18) nicht mehr am entsprechenden Synchronring (32, 34, 36, 38) anliegt bzw. angedrückt wird, und
f) Erreichen der Schaltstellung, wobei das Stellelement (20) nicht mehr an der Lüftungskontur (54) anliegt.

10. Verfahren nach Anspruch 9, **dadurch gekennzeichnet, dass** die ausgeübte axiale Kraft größer als die Reibkraft zwischen dem Druckstück (18) und dem Synchronkörper (12) ist.

## Claims

1. A synchronizer (10) for a gear transmission, comprising a synchronizer body (12) which is associated with a transmission shaft, a first and a second synchronizer ring (32, 34, 36, 38) which are associated with a first and a second transmission gear (28, 30), respectively, and can synchronize the rotational speeds of the synchronizer body (12) and the corresponding transmission gear (28, 30) during a shifting operation, a sliding sleeve (26) which is non-rotatably arranged on the synchronizer body (12) and can be shifted from a neutral position in opposite directions into a first and a second shifting position in order to non-rotatably couple the first and, respectively, the second transmission gear (28, 30) with the synchronizer body (12), and at least one thrust piece (18) which is shiftably arranged on the synchronizer body (12) and can exert an axial compressive force on the corresponding synchronizer ring (32, 34, 36, 38) during a shifting operating, wherein an elastic actuating element (20) is provided, which is active between the sliding sleeve (26) and the thrust piece (18), **characterized in that** a detent recess (50) for the neutral position as well as a release contour (54) are provided on the sliding sleeve (26), wherein the release contour (54) can cooperate with the actuating element (20) such that when the sliding sleeve (26) is shifted for being engaged with one of the transmission gears (28, 30), the thrust piece (18) is urged away from the corresponding synchronizer ring (32, 34, 36, 38), and wherein the release contour (54) has an axial length which is not more than twice the idle stroke of the sliding sleeve (26) between the neutral position and the position in which the corresponding synchronizer ring (32, 34, 36, 38) presses against a friction surface associated with it.

2. The synchronizer (10) according to claim 1, **characterized in that** the actuating element (20) is arranged on the thrust piece (18) via a spring (24).

3. The synchronizer (10) according to claim 2, **characterized in that** the actuating element (20) comprises a ball (22) which in the neutral position is urged into the detent recess (50) of the sliding sleeve (26) by the spring (24).

4. The synchronizer (10) according to any of the preceding claims, **characterized in that** the release contour (54) is adjoined by a protrusion (52) on the side associated with the detent recess (50) and by a holding portion (56) on the opposite side.

5. The synchronizer (10) according to claim 4, **characterized in that** the center of the protrusion (52) has an axial distance to the center of the detent recess (50) which is smaller than the axial shifting path of the sliding sleeve (26) that is covered, in order to transmit a torque from the synchronizer body (12) to one of the transmission gears (28, 30), in particular is smaller than the axial shifting path of the sliding sleeve (26) minus the distance covered by the thrust piece (18) from the neutral position up to the abutment against the corresponding synchronizer ring (32, 36).

6. The synchronizer (10) according to any of the preceding claims, **characterized in that** the release contour (54) includes an angle α to the axial alignment (A) of the synchronizer (10), which lies between 10° and 40°, in particular is 25°.

7. The synchronizer (10) according to any of the preceding claims, **characterized in that** the first and the second synchronizer ring (32, 34, 36, 38) are each formed to be cone-shaped, in particular that per transmission gear (28, 30) a cone-shaped intermediate ring (40, 42) and two cone-shaped synchronizer rings (32, 34, 36, 38) are provided, between which the intermediate ring (40, 42) is arranged so that a triple-cone synchronizer is formed.

8. The synchronizer (10) according to any of the preceding claims, **characterized in that** the side of the sliding sleeve (26) associated with the synchronizer body (12) is formed mirror-symmetrical with respect to its vertical middle axis.

9. A method for shifting a gear in a synchronizer (10) comprising a synchronizer body (12) which is associated with a transmission shaft, a first and a second synchronizer ring (32, 34, 36, 38) which are associated with a first and a second transmission gear (28, 30), respectively, and can synchronize the rotational speeds of the synchronizer body (12) and the corresponding transmission gear (28, 30) during a shifting operation, a sliding sleeve (26) which is non-rotatably arranged on the synchronizer body (12) and can be shifted from a neutral position in opposite directions into a first and a second shifting position in order to non-rotatably couple the first and, respectively, the second transmission gear (28, 30) with the synchronizer body (12), and at least one thrust piece (18) which is shiftably arranged on the synchronizer body (12) and can exert an axial compressive force on the corresponding synchronizer ring (32, 34, 36, 38) during a shifting operating, wherein an elastic actuating element (20) is provided, which is active between the sliding sleeve (26) and the thrust piece (18), comprising the steps of:
a) axially shifting the sliding sleeve (26) from the neutral position to a shifting position,
b) pressing the thrust piece (18) rotating with the synchronizer body (12) against the synchronizer ring (32, 34, 36, 38) associated with the transmission gear (28, 30) for pre-synchronization,
c) synchronizing the rotational speeds of the synchronizer body (12), of the corresponding synchronizer ring (32, 34, 36, 38) and of the transmission gear (28, 30),
d) further axial shifting of the sliding sleeve (26) to the shifting position after completed synchronization,
**characterized in that** the method additionally includes the following steps,
e) exerting an axial force pointing away from the corresponding transmission gear (28, 30) on the thrust piece (18), in particular on the actuating element (20), by the release contour (54) of the sliding sleeve (26) during the further axial shifting so that the thrust piece (18) no longer rests or is pressed against the corresponding synchronizer ring (32, 34, 36, 38), and
f) reaching of the shifting position, wherein the actuating element (20) no longer rests against the release contour (54).

10. The method according to claim 9, **characterized in that** the axial force exerted is greater than the frictional force between the thrust piece (18) and the synchronizer body (12).

## Revendications

1. Moyen de synchronisation (10) pour boîte de vitesse, présentant un corps de synchronisation (12) qui est associé à une arbre de transmission, un premier et un deuxième anneau de synchronisation (32, 34, 36, 38) associés à un premier et à un deuxième pignon de vitesse (28, 30), respectivement, et qui sont aptes à synchroniser les vitesses de rotation du corps de synchronisation (12) et du pignon de vitesse (28, 30) correspondant lors d'un passage de vitesse, un baladeur (26) qui est agencé solidaire en rotation sur le corps de synchronisation (12) et qui est apte à être déplacé à partir d'une position neutre dans des sens opposés dans une première et une deuxième position de passage de vitesse pour coupler le premier et le deuxième pignon de vitesse (28, 30), respectivement, de manière solidaire en rotation au corps de synchronisation (12), et au moins une pièce de pression (18) qui est agencée de manière déplaçable sur le corps de synchronisation (12) et qui est apte à exercer une force de pression axiale sur l'anneau de synchronisation (32, 34, 36, 38) correspondant lors d'un passage de vitesse, un élément de réglage élastique (20) qui agit entre le baladeur (26) et la pièce de pression (18) étant prévu, **caractérisé en ce qu'**il est prévu un évidement d'enclenchement (50) pour la position neutre et un contour d'aération (54) sur le baladeur (26), le contour d'aération (54) étant apte à coopérer avec l'élément de réglage (20) de telle sorte que la pièce de pression (18) est sollicitée en éloignement de l'anneau de synchronisation (32, 34, 36, 38) correspondant lorsque le baladeur (26) est déplacé pour parvenir en engagement avec l'un des pignons de vitesse (28, 30), et le contour d'aération (54) présentant une longueur axiale qui n'est pas supérieure au double de la course à vide du baladeur (26) entre la position neutre et la position dans laquelle l'anneau de synchronisation (32, 34, 36, 38) correspondant pousse contre une surface de friction associée à celui-ci.

2. Moyen de synchronisation (10) selon la revendication 1, **caractérisé en ce que** l'élément de réglage (20) est agencé sur la pièce de pression (18) au moyen d'un ressort (24).

3. Moyen de synchronisation (10) selon la revendication 2, **caractérisé en ce que** l'élément de réglage (20) comprend une bille (22) qui, dans la position neutre, est poussée dans l'évidement d'enclenchement (50) du baladeur (26) par le ressort (24).

4. Moyen de synchronisation (10) selon l'une des revendications précédentes, **caractérisé en ce que** du côté associé à l'évidement d'enclenchement (50), une saillie (52) et, du côté opposé, un tronçon de retenue (56) se raccordent au contour d'aération (54).

5. Moyen de synchronisation (10) selon la revendication 4, **caractérisé en ce que** le centre de la saillie (52) présente une distance axiale du centre de l'évidement d'enclenchement (50) qui est inférieure au trajet de passage de vitesse axial du baladeur (26) qui est parcouru pour transmettre un couple de rotation du corps de synchronisation (12) à l'un des pignons de vitesse (28, 30), en particulier inférieur au trajet de passage de vitesse axial du baladeur (26) déduction faite du chemin parcouru par la pièce de pression (18) depuis la position neutre jusqu'à l'appui contre l'anneau de synchronisation (32, 36) correspondant.

6. Moyen de synchronisation (10) selon l'une des revendications précédentes, **caractérisé en ce que** le contour d'aération (54) présente un angle α par rapport à l'orientation axiale (A) du moyen de synchronisation (10) qui est compris entre 10° et 40° et est en particulier égal à 25°.

7. Moyen de synchronisation (10) selon l'une des revendications précédentes, **caractérisé en ce que** le premier et le deuxième anneau de synchronisation (32, 34, 36, 38) sont chacun réalisés en forme de cône, en particulier **en ce que** pour chaque pignon de vitesse (28, 30) il est prévu un anneau intermédiaire (40, 42) en forme de cône et deux anneaux de synchronisation (32, 34, 36, 38) en forme de cône entre lesquels l'anneau intermédiaire (40, 42) est agencé de manière à former un moyen de synchronisation à trois cônes.

8. Moyen de synchronisation (10) selon l'une des revendications précédentes, **caractérisé en ce que** le côté du baladeur (26) qui est associé au corps de synchronisation (12) est réalisé à symétrie spéculaire par rapport à son axe médian vertical.

9. Procédé de passage d'une vitesse dans un moyen de synchronisation (10) comportant un corps de synchronisation (12) associé à un arbre de transmission, un premier et un deuxième anneau de synchronisation (32, 34, 36, 38) qui sont associés à un premier et à un deuxième pignon de vitesse (28, 30), respectivement, et qui sont aptes à synchroniser les vitesses de rotation du corps de synchronisation (12) et du pignon de vitesse (28, 30) correspondant lors d'un passage de vitesse, un baladeur (26) qui est agencé de manière solidaire en rotation sur le corps de synchronisation (12) et qui est apte à être déplacé depuis une position neutre dans des sens opposés dans une première et une deuxième position de passage de vitesse pour coupler le premier et le deuxième pignon de vitesse (28, 30), respectivement, de manière solidaire en rotation au corps de synchronisation (12), et au moins une pièce de pression (18) qui est agencée de manière déplaçable sur le corps de synchronisation (12) et qui est apte à exercer une force de pression axiale sur l'anneau de synchronisation (32, 34, 36, 38) correspondant lors d'un passage de vitesse, un élément de réglage élastique (20) qui agit entre le baladeur (26) et la pièce de pression (18) étant prévu, comprenant les étapes suivantes :
a) déplacement axial du baladeur (26) de la position neutre dans une position de passage de vitesse,
b) pression de la pièce de pression (18) tournant ensemble avec le corps de synchronisation (12) contre l'anneau de synchronisation (32, 34, 36, 38) associé au pignon de vitesse (28, 30) pour une pré-synchronisation,
c) synchronisation des vitesses de rotation du corps de synchronisation (12), de l'anneau de synchronisation (32, 34, 36, 38) correspondant et du pignon de vitesse (28, 30),
d) déplacement axial supplémentaire du baladeur (26) vers la position de passage de vitesse après la réalisation d'une synchronisation,
**caractérisé en ce que** le procédé comprend les étapes supplémentaires suivantes,
e) exercice d'une force axiale dirigée en éloignement du pignon de vitesse (28, 30) correspondant sur la pièce de pression (18), en particulier sur l'élément de réglage (20), par le contour d'aération (54) du baladeur (26) lors du déplacement axial supplémentaire, de sorte que la pièce de pression (18) n'est plus en appui ou n'est plus poussée contre l'anneau de synchronisation (32, 34, 36, 38), et
f) arrivée dans la position de passage de vitesse, l'élément de réglage (20) n'étant plus en appui contre le contour d'aération (54).

10. Procédé selon la revendication 9, **caractérisé en ce que** la force axiale exercée est supérieure à la force de friction entre la pièce de pression (18) et le corps de synchronisation (12).
